(19) Europäisches Patentamt
European Patent Office
Office européen des brevets

(11) **EP 1 468 516 B1**

(12) **EUROPEAN PATENT SPECIFICATION**

(45) Date of publication and mention
of the grant of the patent:
**28.07.2010   Bulletin 2010/30**

(51) Int Cl.:
***H04L 1/00*** *(2006.01)*

(21) Application number: **03700396.9**

(22) Date of filing: **20.01.2003**

(86) International application number:
**PCT/GB2003/000238**

(87) International publication number:
**WO 2003/063405 (31.07.2003 Gazette 2003/31)**

(54) **WIRELESS TRANSMISSION WITH VARIABLE CODE RATES**

DRAHTLOSE UEBERTRAGUNG MIT VERÄNDERLICHER KODIERUNGSRATE

TRANSMISSION SANS FIL A VITESSE DE CODAGE VARIABLE

(84) Designated Contracting States:
**AT BE BG CH CY CZ DE DK EE ES FI FR GB GR
HU IE IT LI LU MC NL PT SE SI SK TR**

(30) Priority: **18.01.2002   GB 0201139**

(43) Date of publication of application:
**20.10.2004   Bulletin 2004/43**

(73) Proprietor: **Inmarsat Global Limited
London
EC1Y 1AX (GB)**

(72) Inventors:
• **TRACHTMAN, Eyal**
   **London EC1Y 1AX (GB)**
• **PLESSY-GOURDON, Carole**
   **London EC1X 1AX (GB)**
• **FEBVRE, Paul**
   **Ipswich IP4 56HF (GB)**
• **FINES, Panagiotis**
   **London EC1Y 0FU (GB)**

(74) Representative: **Cross, James Peter Archibald et
al
R.G.C. Jenkins & Co
26 Caxton Street
London SW1H 0RJ (GB)**

(56) References cited:
**EP-A- 0 924 890      WO-A-95/15033**

• **FAIRHURST G ET AL: "Smart codec: an adaptive
packet data link" IEE PROCEEDINGS:
COMMUNICATIONS, INSTITUTION OF
ELECTRICAL ENGINEERS, GB, vol. 145, no. 3, 16
June 1998 (1998-06-16), pages 180-185,
XP006010904 ISSN: 1350-2425**

**Description**

**Field of the Invention**

The present invention relates to a communication method, apparatus, system and signal, particularly but not exclusively for adapting parameters of a wireless interface to terminal type and/or link conditions.

**Background of the Invention**

Adaptive power control techniques are known for adapting a wireless interface to link conditions. Furthermore, EP-A-0 772 317 describes a technique in which both power and forward error correction (FEC) coding are varied according to fading conditions at a receiver, which are reported to the transmitter using a low-bandwidth return link.

Also known are wireless communications systems which support different types of terminal with different characteristics. For example, the Inmarsat™ geostationary satellite system supports a number of different services, including Inmarsat-M™, Inmarsat mini-M™ and Inmarsat-M4™, each designed for different types of terminal. However, each service uses a separate, pre-defined set of channels each having a predefined channel type.

It would be advantageous to provide a flexible wireless interface that can be adapted to link conditions and/or terminal type.

It would also be advantageous to allow channels for different terminal types to be multiplexed onto the same bearer.

It would also be advantageous to allow channels multiplexed onto the same bearer to be adapted to link conditions independently of each other.

It would also be advantageous to provide a high degree of freedom in the adaptation of parameters of a wireless interface.

The document EP-A-0 878 924 discloses a TDMA communication system which allows mobile terminals to be set for working in any one of a number of different communication environments, such as a pedestrian environment, a vehicular environment, a satellite environment and an office environment. The transmission format has a fixed frame length and number of bits per slot, but has different sets of values for power, modulation method, number of multiplexed signals, error correction, antenna gain, frequency hopping and diversity for each environment. A mobile station and base station select one of these sets for communication with each other. The selection may be made manually by the mobile station user, automatically by the mobile station detecting broadcast messages from the base station indicating which environments are available, or automatically by estimation of the transmission channel.

The document EP-A-1 130 837 discloses a packet data burst format including a unique word, a header modulated with a default modulation and coding scheme and a payload modulated with a modulation and coding scheme specified by the header.

The document EP-A-0 680 168 discloses a method of "slicing" in the time and frequency domains to provide efficient allocation to users with different requirements.

The document EP-A-0 651 531 discloses a communication technique using a variable error correction bandwidth.

The document EP-A-0924890 relates to a method of data transfer between a transmitter and a receiver over a communications link achieving maximum throughput by dynamically adapting a coding rate, and specifically an error correction encoder, as a function of a measured reverse channel signal parameter. The method comprises the steps of transmitting a signal from the transmitter to the receiver, the receiver receiving and measuring the signal to noise ratio of the transmitted signal. The receiver determines an appropriate code rate and encoding technique as a function of the measured signal to noise ratio and transmits an encoding identifier of the determined encoder to the transmitter. The transmitter encodes its data according to the encoding identifier and transmits the encoded message to the receiver. The receiver receives the encoded message and decodes the message according to the determined code rate and encoding technique.

**Statement of the Invention**

The invention relates to a satellite communication method wherein a satellite terminal varies the coding rate of bursts transmitted to a satellite base station under the control of a satellite base station, so as to maintain the quality of reception of bursts at the satellite base station at a predetermined level. The coding rate may be varied between different predetermined values which give substantially constant gain increments.

Aspects of the invention are set out in the accompanying claims.

## Brief Description of the Drawings

Specific embodiments of the present invention will now be described with reference to the accompanying drawings, in which:

Figure 1 is a schematic diagram of a satellite communications system in an embodiment of the present invention;
Figure 2a is a schematic diagram of a transmitter channel unit in the embodiment;
Figure 2b is a schematic diagram of a receiver channel unit in the embodiment;
Figure 3 is a diagram of an FEC encoder used in transmitter channel unit;
Figure 4 is a diagram of an SRCC coding module in the FEC encoder;
Figure 5 is a frequency/time diagram illustrating forward bearers sharing frequency channels;
Figure 6 is a frequency/time diagram illustrating return bearers sharing frequency channels;
Figure 7 is a diagram of one specific type of forward bearer format;
Figure 8 is a diagram of one specific type of return bearer format; and
Figure 9 is a diagram of an example of a forward bearer carrying multiple terminal connection packets with a varying coding rate.

## Detailed Description of Embodiments of the Invention

### Mobile Satellite System

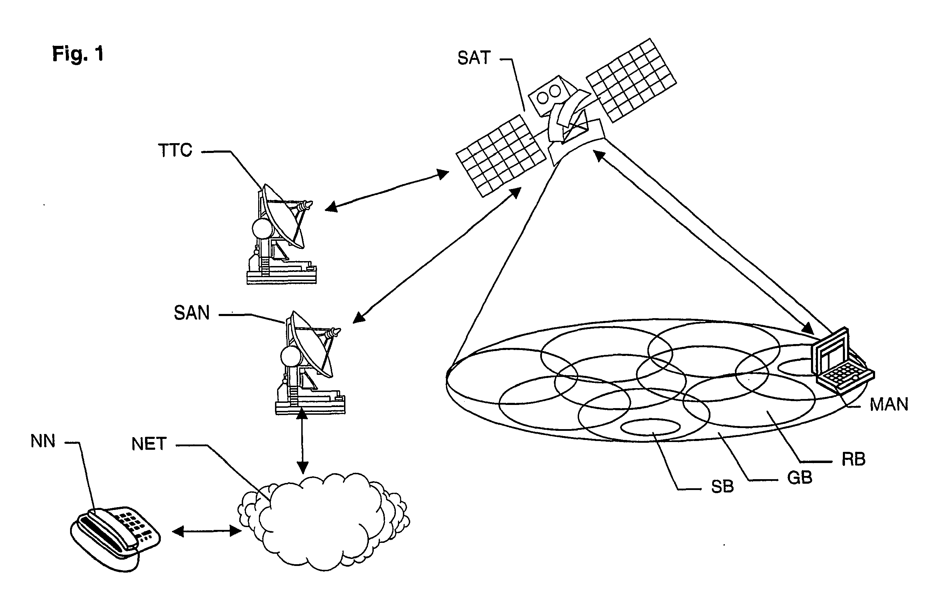

Figure 1 shows schematically a geostationary satellite communication system including one or more satellite access nodes (SANs) which act as gateways to other communications networks NET for communication with any of a large number of network nodes NN. Each SAN is able to communicate with a plurality of mobile access nodes (MANs) using radio frequency (RF) channels retransmitted by a geostationary satellite SAT. RF channel bandwidths of 90 kHz and 190 kHz are supported by the transponder design of the satellite. The feeder link transmitted and received between the SAN and the satellite comprises a set of frequency channels at C band, while the user link transmitted between the MANs and the satellite comprises a set of frequency channels at L band. A transmission in the direction from the SAN to one or more of the MANs is referred to as a forward link, while a transmission in the direction from one of the MANs to the SAN is referred to as a return link. Channel conditions on the feeder link may vary depending on atmospheric conditions and sources of interference. Channel conditions on the user link may also vary depending on atmospheric conditions and sources of interference, which may depend on the position of the relevant MAN. Hence, user link conditions may vary between MANs.

### Satellite

The satellite SAT includes a beam former, receive antenna and transmit antenna (not shown) which generate substantially congruent receive and transmit beam patterns. Each beam pattern consists of a global beam GB, a small number of overlapping regional beams RB which are narrower than and fall substantially within the global beam, and a large number of spot beams SB (only two of which are shown, for clarity) which are narrower than the regional beams and may fall either within or outside the regional beams, but fall substantially within the global beam. Each spot beam may or may not overlap another spot beam, and at least some of the spot beams are steerable so that their area of coverage on the earth's surface can be changed.

The satellite includes a transponder which maps each C-band frequency channel received in the feeder link onto a corresponding L-band frequency channel transmitted in a specified beam in the user link, and maps each L-band frequency channel received in each beam in the user link onto a corresponding frequency channel in the feeder link. The mapping between frequency channels can be altered under the control of a telemetry, tracking and control (TTC) station. The satellite SAT acts as a 'bent pipe' and does not demodulate or modify the format of the signals within each frequency channel.

One example of parameters of a spot beam is given below.

**Table 1- Satellite Spot beam Parameters**

| Satellite Parameter | Forward | Return |
| --- | --- | --- |
| NPR | 17 | 20 |
| Co-channel level (50%) | 19 | 19 |
| L-Band G/T (dB/K) | -10 | 10 |

(continued)

| Satellite Parameter | Forward | Return |
| --- | --- | --- |
| Transponder gain | 180 | 182 |
| EIRP (dBW) per carrier | 44 | - |

## Terminal Types

The satellite communication system is designed to provide simultaneous services to a very large number of MANs of different types. For example, a handheld (HH) terminal has very low RF power, an antenna which is substantially omnidirectional in azimuth, and typical dimensions of 10 cm $\times$ 5 cm $\times$ 1 cm. A pocket-sized or A5 terminal has low RF power, a directional antenna ANT with small aperture and typical dimensions of 20 cm $\times$ 15 cm $\times$ 2 cm. A notebook-sized or A4 terminal has medium RF power, a directional antenna of medium aperture and typical dimensions of 30 cm $\times$ 20 cm $\times$ 3 cm. A briefcase-sized or A3 terminal has high RF power, a directional antenna of large aperture and typical dimensions of 40 cm $\times$ 30 cm $\times$ 5 cm.

In one example, the parameters of the terminal types are as shown in Tables 1 and 2 below:

### Table 2 - Terminal Parameters

| Terminal Parameter | HH | A5 | A4 | A3 |
| --- | --- | --- | --- | --- |
| Target L-band fade margin | 4.5 | 3.7 | 3.1 | 2.5 |
| G/T | -23 | -18 | -12 | -9 |
| RF Power (W) | 1.5 | 1.9 | 2.8 | 7.2 |
| Antenna gain | 3.5 | 7.5 | 12 | 15.2 |
| Pointing loss | 0.4 | 0.8 | 1.2 | 1.5 |
| Max EIRP towards satellite | 4.6 | 8.6 | 13.6 | 20.9 |

The terminal type of the MAN may be identified to the SAN during registration of the MAN with the SAN, or the SAN may obtain this information from an external source based on the identity of the MAN.

## Transmitter Channel Unit Details

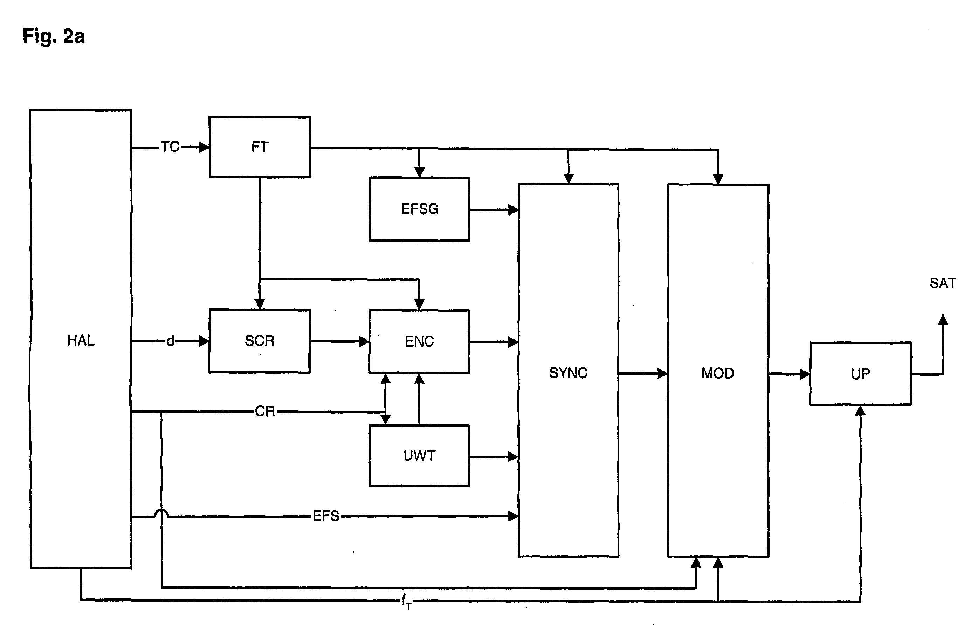

Figure 2a shows the functions of a transmitter channel unit (TCU), which performs the encoding and modulation of signals for transmission over a single frequency channel. The SAN contains multiple such TCUs, sufficient for the maximum number of transmitted frequency channels in the feeder link. Each MAN contains at least one TCU.

A hardware adaptation layer HAL provides an interface between the channel units and higher-level software which controls the settings of the channel units, handles the demodulated received signals and outputs the signals for transmission. The higher-level software may include a medium access control (MAC) layer which maps logical channels onto bearer connections and bearer connections onto the physical layer, as described for example in EP-A-0 993 149.

In the TCU, the HAL outputs data blocks of a predetermined but variable block size, containing data bits d, which are scrambled by a scrambler SCR and redundancy encoded by an encoder ENC at a coding rate CR set by the HAL.

Data and parity bits are output from the encoder ENC to a transmit synchroniser SYNC which formats the bits into modulation sets, each of which determines the modulation state of one modulated symbol, for output to a modulator MOD which modulates the sets according to a variable modulation scheme output by the HAL. Unique word (UW) symbols are also input from a unique word table UWT to the synchroniser SYNC for output in accordance with a selected air interface format as will be described below. Empty frames, which are used as input if no data is to be sent, in response to empty frame signalling EFS from the HAL, are generated by an empty frame signalling generator EFSG.

The output timing of the different stages is controlled by a frame timing function FT which receives timing corrections TC from the HAL. The HAL selects the output frequency of the transmitter channel unit TCU by controlling a transmit frequency $f_T$ of an upconverter UP, the output of which is transmitted to the satellite SAT.

## Receiver Channel Unit Details

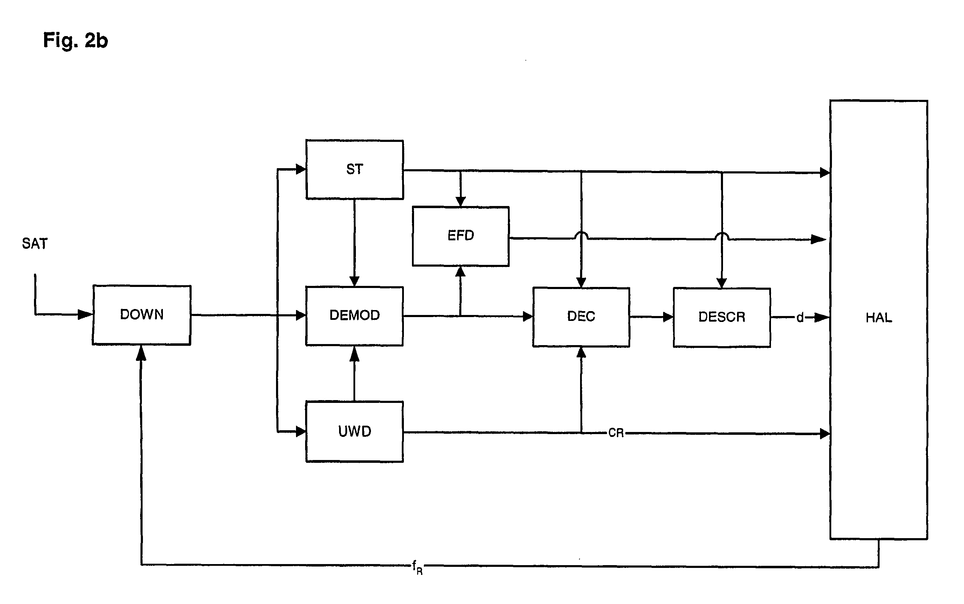

Figure 2b shows a receiver channel unit (RCU), which performs the demodulation and decoding of signals received on a single frequency channel. The SAN contains multiple such RCUs, sufficient for the maximum number of received frequency channels in the feeder link. Each MAN contains at least, one RCU.

In the RCU, a frequency channel is received from the satellite SAT, downconverted by mixing with a downconversion frequency signal at a downconverter DOWN at a reception frequency $f_R$ controlled by the HAL, and demodulated by a demodulator DEMOD.

The frame timing of the bursts is determined by a receive synchronisation timing detector ST and by a unique word detector UWD. The demodulated burst is decoded by a decoder DEC according to a coding rate CR determined by the unique word detector, and descrambled by a descrambler DESCR. The data contents of the burst are then received by the HAL. Empty frames are detected by an empty frame detector EFD.

The receive timing may be determined by a decoder-assisted frame synchronisation technique, as described for example in GB-A-2371952, or in the paper 'Decoder-assisted frame synchronisation for Turbo coded systems', Howlader, Wu and Woerner, 2nd International Symposium on Turbo Codes, Brest, Sept. 2000.

### FEC Coder Details

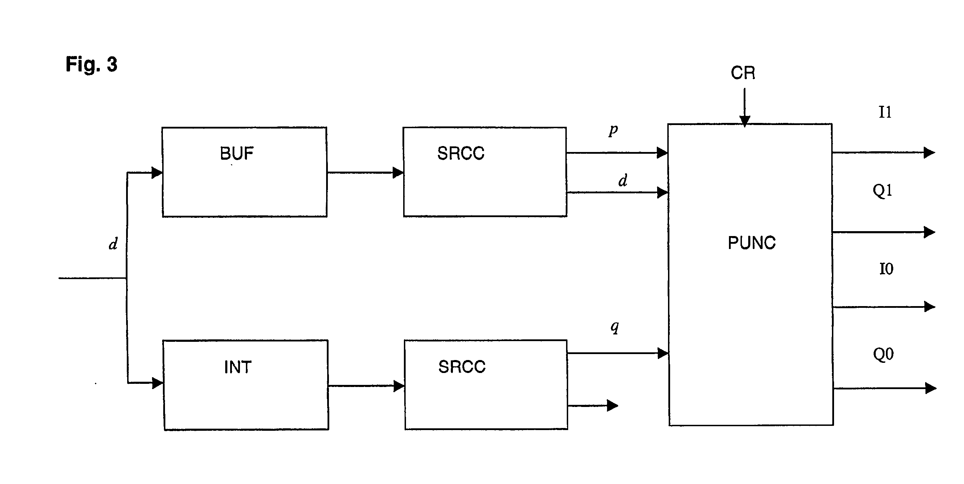

In a preferred embodiment, the encoder ENC performs a Turbo encoding algorithm such as described generally in the paper 'Near Shannon limit error-correcting coding and decoding: Turbo codes', Berrou, C., Glavieux, A. and Thitimajshima, P, Proc. of ICC '93, pp 1064-1070 or with enhancements such as described in WO99/34521. A Turbo coder, as shown in Figure 3, consists of a buffer BUF and an interleaver INT which both receive data bits d in parallel and output the data bits to respective identical 16-state Systematic Recursive Convolutional Code encoders SRCC with respective streams of parity bits p, q. The unencoded data bits d, and the parity bits p, q are output to a puncturer PUNC which generates modulation sets of bits from all of the data bits d and some of the parity bits p, q according to a puncturing matrix which determines which of the parity bits p, q are selected for transmission, and hence the coding rate. The puncturing matrix can be modified to change the coding rate CR, as dictated by the HAL.

The size of the interleaver INT determines the encoder block size; a block of data bits d is loaded into the buffer BUF and the interleaver INT, the block of data bits d is encoded by the SRCC encoders and the punctured bits are output by the puncturer PUNC.

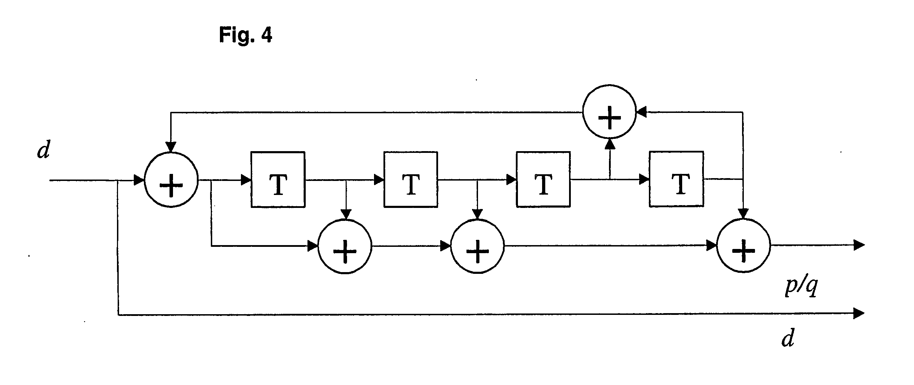

Figure 4 shows the structure of either of the SRCC encoders. Input data bits d are supplied in parallel to a systematic data output and to a recursive convolutional encoder comprising four shift registers T and binary adders, arranged as shown in Figure 4 to output the parity bits p or q. The backward polynomial is $23_8$ and the forward polynomial is $35_8$:

$$\text{Backward polynomial: } 1 + X^3 + X^4$$

$$\text{Forward polynomial: } 1 + X + X^2 + X^4$$

The SRCC encoders are initialised by setting the shift registers T to a zero state before each block of data bits d so that their output does not depend on the bits from any previous block. No flush bits are added.

Any suitable algorithm, such as the well-known MAP or SOVA algorithms, may be used in the decoder DEC.

### Bearer Types

It is not possible to provide a single air interface standard which optimises the transmission rate available to the larger terminals while maintaining communication with the smallest terminals. This problem is solved by supporting a plurality of different bearer types defined by their symbol rate and modulation scheme.

Each bearer is defined as a burst within a frame or slot in a Time Division Multiplex (TDM)/Time Division Multiple Access (TDMA)/ Frequency Division Multiple Access (FDMA) scheme; in other words, bearers are separated by frequency (FDMA), each frequency channel is divided into periodic frames, each frame either containing one bearer or being divided into two or more timeslots each containing a bearer. In the forward direction, different bearers are assigned to different frames which are multiplexed together in the same frequency channel (TDM). In the return direction, different terminals may transmit bearers in different time slots which may be in the same frequency channel (TDMA). The frame period is 80 ms and the time slot period may be 80, 20 or 5 ms.

The supported bearer parameters are as follows:

**Table 3 - Bearer Parameters**

| Modulation | Symbol Rate (kS/s) |
|---|---|
| 4-ary (π/4 QPSK), 16QAM | 16.8, 33.6, 67.2, 151.2 |

However, not all possible combinations are supported, because some are redundant and others do not provide suitable performance for any type of communication in any beam with any terminal.

The supported bearer types are identified herein by a code of format DPTRM indicating direction D, burst period P, type T (which is used merely as a separator), symbol rate R, and modulation M as follows:

**Table 4 - Bearer Parameter Codes**

| D | P (ms) | R (33.6 kS/s) | M |
|---|---|---|---|
| F = Forward | 80 | 0.25 | X = 16-QAM |
| R = Return | 20 | 0.5 | Q = π/4 QPSK |
|  | 5 | 1 |  |
|  |  | 2 |  |
|  |  | 4 |  |
|  |  | 4.5 |  |
|  |  | 5 |  |

For example, the code F80T4.5X means a forward bearer with 80 ms burst length, symbol rate 151.2 kS/s, 16-QAM modulation. Optional code suffixes 2B or 4B may be added to indicate the number of FEC blocks which the bearer burst contains. Each FEC block is FEC encoded independently.

The supported bearers, together with their associated bandwidth, are shown below in Table 5:

**Table 5 - Supported Bearers**

| Code | Bandwidth (kHz) |
|---|---|
| R20T0.5Q | 21 |
| F80T1Q4B | 42 |
| F80T1X4B | 42 |
| R20T1Q | 42 |
| R20T1X | 42 |
| R20T2X | 84 |
| R5T2X | 84 |
| R20T2Q | 84 |
| R5T2Q | 84 |
| F80T4.5X | 189 |
| R20T4.5Q | 189 |
| R5T4.5Q | 189 |
| R20T4.5X | 189 |
| R5T4.5X | 189 |

However, R5T4.5Q and R5T4.5X are optional as their data rate is equivalent to that of the R20T1 bearers but they are less bandwidth efficient. Furthermore, some other possible bearers may be implemented for backwards compatibility with existing systems, such as F80T1X2B and F80T1Q2B.

**Shared Frequency Channels**

Each frequency channel transmitted by the satellite may be shared in frequency between different bearers each occupying less than one half of the available bandwidth. For example, a 190 kHz frequency channel may contain two 84 kHz bearers, four 42 kHz bearers, eight 21 kHz bearers, or a combination of these. Likewise, a 90 kHz frequency channel may contain two 42 kHz bearers, four 21 kHz bearers or a combination of these such as one 42 kHz bearer and two 21 kHz bearers. Forward bearers which are adjacent in frequency and have the same modulation scheme are transmitted synchronously, allowing simultaneous demodulation of multiple bearers by the MANs. The MANs are able to receive up to four adjacent bearers in this way. This adds flexibility in the data rate and/or channel type provided to an MAN. For example, two 42 kHz bearers may be assigned to an MAN where a single 84 kHz or 189 kHz bearer is not available, such as in a regional beam RB. One bearer may be used for unicast data stream or signalling and the second could be a broadcast/multicast bearer. Hence, bearer acquisition need only be performed once for multiple synchronous bearers. Moreover, symbol timing may be synchronised between successive frames to assists the MANs in acquiring timing. Even where the coding rate of a block is too high for an MAN to decode successfully, the MAN may still detect the symbol timing and will therefore be able to decode subsequent blocks with lower coding rates.

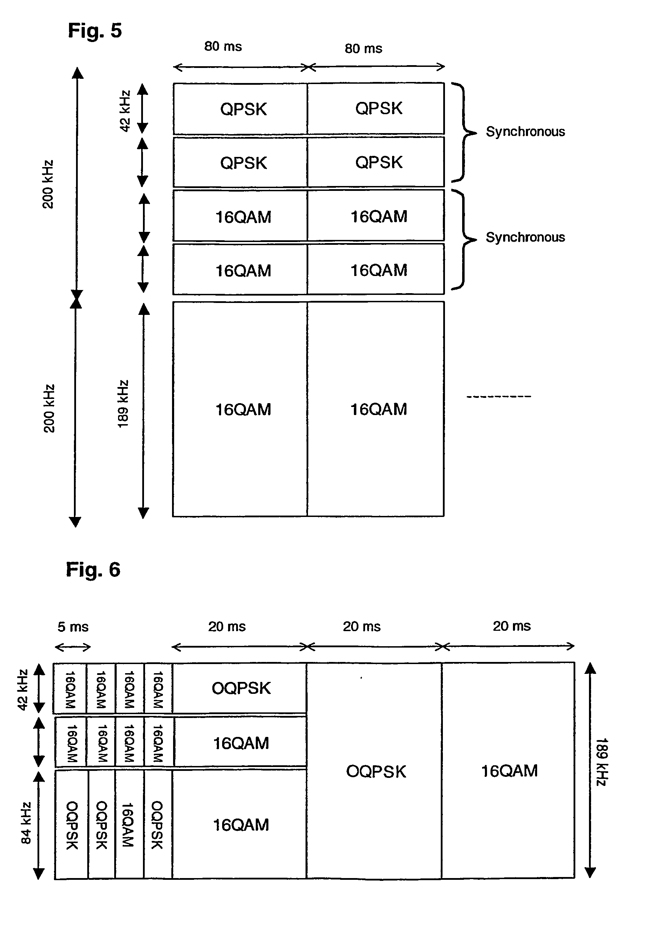

An example of shared forward frequency channels is shown in Figure 5, in which a first 200 kHz channel contains two F80T1X and two F80T1Q bearers, while a second 200 kHz channel contains one F80T4.5X bearer. Figure 5 shows the same shared frequency channel format between two adjacent frames, but adjacent frames may contain different shared channel formats. For example, the modulation scheme may be varied on each frequency subchannel between frames, and an MAN receiving that subchannel may automatically detect any changes in modulation between frames. Automatic detection is facilitated by selecting from modulation schemes which are sub- or supersets of one another (e.g. QPSK and 16QAM).

An example of shared return frequency channels is shown in Figure 6, in which one frame of a 200 kHz channel contains the following bearer types multiplexed in frequency and time: R5T1X ($\times$ 8), R5T2Q, R5T2X ($\times$ 3), R20T1Q, R20T1X, R20T2X, R20T4.5Q, R20T4.5X.

The sharing schedule of each return frequency channel is controlled by the SAN and transmitted in Return Schedule packets in the forward bearers. The return schedule dictates the bearer types and their arrangement within a frame.

**Coding Rate Subtypes**

Each bearer type comprises a set of subtypes having different FEC coding rates to provide different carrier to noise ratios C/No. The subtypes are identified by codes as shown below in Tables 6 and 7 for 4-ary and QAM bearers respectively. The exact coding rate values are optimised for each bearer type in such a way that the data payload carries an integer number of octets.

**Table 6 - Subtypes for 4-ary bearers**

| Subtype | L8 | L7 | L6 | L5 | L4 | L3 | L2 | L1 | RE | H1 |
|---|---|---|---|---|---|---|---|---|---|---|
| Code Rate | 1/3 | 2/5 | 1/2 | 5/9 | 5/8 | 2/3 | 3/4 | 4/5 | 5/6 | 7/8 |

**Table 7 - Subtypes for QAM bearers**

| Subtype | L3 | L2 | L1 | RE | H1 | H2 | H3 | H4 | H5 | H6 |
|---|---|---|---|---|---|---|---|---|---|---|
| CodeRate | 1/3 | 2/5 | 4/9 | 1/2 | 4/7 | 5/8 | 2/3 | 3/4 | 4/5 | 6/7 |

For each bearer type, a range of discrete coding rates is selected to give progressive changes of approximately 1 dB in the C/No performance of the bearer, as described below.

**Forward Frame Format**

The forward bearer formats include an initial UW and distributed pilot symbols. The frame duration is 80 ms.

Bearer types F80T1Q4B and F80T1X4B are low bandwidth high-penetration bearers used for communicating with small aperture terminals, and for signalling. Each frame is divided into four 20 ms FEC blocks.

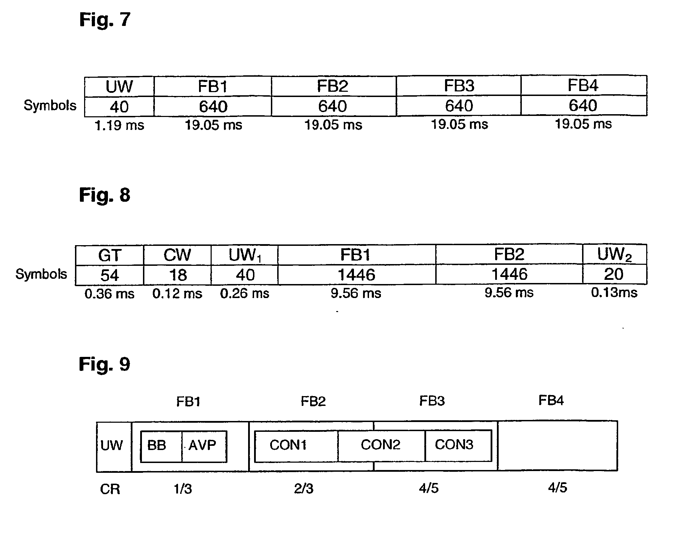

An example of the F80T1Q4B format is shown in Figure 7. In this example, an initial UW of 40 symbols (1.19 ms duration) is followed by four FEC blocks $FB_1$ to $FB_4$ each of 640 symbols (19.05 ms duration), including one pilot symbol after every 29 FEC symbols, giving a total of 29 pilot symbols per frame.

The possible coding rate subtypes for the F80T1Q4B bearer, together with the associated data rate, C/No requirement for burst error rate of $10^{-3}$, step in C/No requirement, and Eb/No is shown below in Table 8:

**Table 8 - F80T1Q4B Coding Rate Subtype Performance**

| Coding Rate Subtype | Data Rate (kBit/s) | C/No Required (dBHz) | C/No Step (dBHz) | Eb/No (dB) |
|---|---|---|---|---|
| L8 | 21.6 | 44.98 | - | 1.43 |
| L7 | 25.6 | 45.84 | 0.86 | 1.55 |
| L6 | 30.4 | 46.82 | 0.98 | 1.78 |
| L5 | 35.2 | 47.71 | 0.89 | 2.04 |
| L4 | 40.0 | 48.60 | 0.89 | 2.37 |
| L3 | 44.8 | 49.53 | 0.93 | 2.81 |
| L2 | 49.2 | 50.46 | 0.93 | 3.33 |
| L1 | 52.8 | 51.52 | 1.06 | 4.09 |
| RE | 55.6 | 52.49 | 0.97 | 4.83 |

Bearer type F80T4.5X is a high bandwidth low penetration bearer used for traffic data. Each frame is subdivided into eight 10 ms blocks to reduce latency, so that this bearer is suitable for voice and video-conferencing applications.

## Return Burst Formats

The duration of return bursts may be either 5 ms or 20 ms, the 5 ms burst length being chosen for low-latency applications. There is only one FEC block per burst except for the highest symbol rate (R = 4.5, 151.2 kS/s) where there are two FEC blocks to avoid an excessive memory requirement for the FEC encoders. On the other hand, a block size of less than about 20 octets is not viable because the turbo decoder performance starts to degrade when the data payload is lower than this threshold. This places a lower limit on the other parameters for a 5ms slot: a minimum symbol rate of 33.6 kS/s with 16-QAM modulation or 67.2 kS/s with 4-ary modulation.

An example of the R20T4.5X bearer structure is shown in Figure 8 and comprises a guard time interval GT of 54 symbol periods in which no symbols are transmitted, a preamble CW of 18 symbols, initial unique word UW1, two FEC blocks FB1 and FB2, and final unique word UW2. The coding rate subtypes and associated performance metrics are shown below in Table 9:

**Table 9 - R20T4.5X Coding Rate Subtype Performance**

| Coding Rate Subtype | Data Rate (kBit/s) | C/No Required (dBHz) | C/No Step (dBHz) |
|---|---|---|---|
| L3 | 192.8 | 55.73 | - |
| L2 | 225.6 | 56.71 | 0.98 |
| L1 | 258.4 | 57.66 | 0.95 |
| R | 292.0 | 58.58 | 0.92 |
| H1 | 332.0 | 59.64 | 1.06 |
| H2 | 372.0 | 60.69 | 1.05 |
| H3 | 408.0 | 61.66 | 0.97 |
| H4 | 448.0 | 62.76 | 1.10 |
| H5 | 475.2 | 63.75 | 0.99 |
| H6 | 492.8 | 64.68 | 0.93 |

**Adaptive Coding Rate**

For all bearer types, the coding rate is variable and can be set independently for each FEC block. The coding rate may be varied in response to the measured C/No for that bearer to achieve a burst error rate performance of $10^{-3}$. The SAN measures the C/No for each return bearer, determines whether any change to the coding rate is required, and if so signals the required change to the MAN transmitting that bearer. The SAN makes a corresponding change in the coding rate to any forward bearers transmitted to that MAN.

In one example, the SAN measures the C/No of each received burst. Based on the received burst type and subtype, and the type of the transmitting MAN, the SAN calculates a gain correction value that is transmitted in a signalling packet to the MAN which transmitted the burst. The MAN may change its transmit power and/or its coding rate to achieve the gain correction indicated by the correction value.

The MAN may also measure the C/No for a received forward bearer and, if the C/No value falls outside a predetermined range and subsequently no instructions to change the coding rate are received from the SAN within a timeout period, the MAN may change the coding rate of its transmitted return bearers so as to compensate for the channel conditions on the return link, on the assumption that the channel conditions are symmetrical on the forward and return links.

Alternatively, the coding rate of the transmitted return bearers may be determined entirely by the MAN based on received on the measured C/No of the forward bearer, and is not signalled by the SAN.

In forward bearers, the coding rate for the first FEC block in a burst is signalled by the initial UW in that burst; the UW is selected by the TCU from a set of UWs, each corresponding to the different coding rate subtypes. Any coding rate changes for subsequent FEC blocks in the burst are signalled by a broadcast signalling packet contained in the first FEC block; if there is no change, this packet is omitted.

As an example, the correspondence between UWs and coding levels for F80X/Q bearers is shown in Table 10 below:

**Table 10 - UWs Corresponding to Coding Rates for F80X/Q Bearers**

| Coding rate | Unique Word Symbols | | | | | | | | |
|---|---|---|---|---|---|---|---|---|---|
| L8 | E | 4 | 5 | 6 | 4 | A | D | A | D | B |
| L7 | B | E | D | 8 | B | 3 | E | A | D | 2 |
| L6 | F | 2 | F | 5 | F | 4 | 9 | 6 | A | 6 |
| L5 | C | 9 | 1 | 1 | 3 | 6 | 4 | 2 | 8 | A |
| L4 | F | 9 | A | 4 | 2 | B | B | 1 | A | B |
| L3 | D | 4 | E | 3 | 5 | 7 | 2 | 9 | 9 | C |
| L2 | 4 | C | B | 9 | D | 9 | D | 1 | 7 | 4 |
| L1 | 6 | A | A | F | 7 | A | 6 | E | 4 | E |
| R | C | 2 | 4 | 0 | E | 9 | 6 | 5 | 8 | 7 |
| H1 | 5 | 1 | 4 | B | B | 8 | B | A | 6 | 2 |
| H2 | B | 5 | 8 | 9 | 6 | C | C | D | D | F |
| H3 | A | 8 | 7 | B | 0 | D | A | 6 | C | 9 |
| H4 | 5 | A | 1 | A | 6 | 7 | 9 | D | 6 | F |
| H5 | 6 | 1 | F | E | A | 5 | 4 | 9 | 4 | 3 |
| H6 | A | 3 | 2 | A | D | 2 | 8 | 1 | C | 4 |
| H7 | 7 | 7 | 5 | D | 1 | B | 0 | 5 | 5 | 8 |
| H8 | D | F | B | 2 | 8 | 8 | 0 | E | 9 | 1 |

In return bearers, the coding rate is also indicated in the initial UW selected by the MAN. The symbol rate may also be adjusted on a burst-by-burst basis and is determined by the return schedules as described above.

## Power Save Mode

If there is no data to send in any block of a frame of a 16-QAM bearer, a predefined transmit sequence is transmitted in which dummy data symbols occupy only the inner points of the 16-QAM constellation, while the pilot symbols occupy their normal outer constellation points. This saves approximately 6 db in transmit power.

## Shared Forward Bearers

To optimise the use of satellite bandwidth, a single forward bearer may contain data addressed to multiple MANs of differing gain. This either restricts the maximum data rate achievable on the bearer, or precludes service to smaller aperture terminals. Furthermore, where the available bandwidth is limited in a beam, or where the receiving MANs are unable to process high bandwidth signals, narrow band (42 kHz) bearers will be used. The mean power of a forward bearer is fixed for the duration of the frame and is set to provide a link of at least threshold performance with the least capable receiving MAN.

In the example shown in Figure 9, a bearer contains a UW which indicates an initial coding rate CR of 1/3 and four FEC blocks FB1 to FB4. The first block FB1 contains a bulletin board packet containing a bulletin board header BB and a coding rate attribute value pair AVP which indicates that the coding rates for the blocks FB2 to FB4 are 2/3, 4/5 and 4/5 respectively. The initial coding rate of 1/3 is chosen so that the least capable of the MANs receiving this bearer will be able to receive the bulletin board packet. Hence, the initial coding rate will be less than or equal to any of the subsequent coding rates. A MAN which determines that it will be unable to decode blocks of higher coding rate may save power by not demodulating those blocks. Blocks FB2 and FB3 contain packets CON1, CON2 and CON3 corresponding to connections to different MANs. The packet CON2 is split over the block boundary and therefore the MAN receiving this packet must be able to decode successfully at a coding rate of 4/5.

Where possible, packets addressed to MANs of the same type are assigned to the same bearer, so that the transmission performance is not limited for more capable MANs by the presence of packets addressed to less capable MANs on the same bearer. However, in low traffic conditions, packets addressed to different types of MAN may be assigned to the same bearer so as to conserve bandwidth. As the traffic level increases, selected MANs may be migrated onto other bearers so as to group them together with other MANs of the same type.

## Alternative Applications

Embodiments of the present invention may be applied to many different types of wireless communication system, including without limitation geostationary, geosynchronous and non-geosynchronous satellite communication systems and terrestrial wireless communication systems. In the case of satellite systems, the satellites may be processing or switching satellites instead of "bent-pipe" or repeater satellites.

## Claims

1. A method of transmitting data from a transmitter to one or more receivers within a burst , comprising the steps of:

   encoding blocks of data at a variable coding rate (CR) to generate forward error corrected blocks so that the forward error-correction coding rate (CR) varies among the forward error corrected blocks (FB1, FB2, FB3, FB4), including in the burst, a header indicating the coding rate (CR) of one of the blocks, and
   including in said one of the blocks data indicating the coding rate (CR) of a subsequent one or more of the blocks (FB1, FB2, FB3, FB4).

2. A method according to claim 1, wherein said one of the blocks is a first one of the blocks (FB1, FB2, FB3, FB4) to be transmitted.

3. A method according to claim 1 or claim 2, wherein said header comprises a variable unique word (UW).

4. A method according to any preceding claim, wherein the coding rate (CR) indicated in the header is less than or equal to the coding rate (CR) of the subsequent one or more blocks (FB 1, FB2, FB3, FB4).

5. A method according to any preceding claim, wherein the blocks (FB1, FB2, FB3, FB4) contain packets addressed to a plurality of receivers.

**6.** A method according to claim 5, wherein at least some of the packets are split between different ones of the blocks.

**7.** A method according to claim 5 or 6, wherein the method further includes determining the least capable of the receivers and selecting one or more parameters of the transmission so as to match the capabilities of the least capable of the receivers.

**8.** A method according to claim 7, wherein the coding rate (CR) is selected to match the capabilities of the least capable of the receivers.

**9.** A method according to claim 5 or 6 wherein the method further comprises identifying the receiving capabilities of the wireless receivers and assigning packets addressed to ones of the receivers having similar receiving capabilities onto the same one of a plurality of bearers.

**10.** A method according to claim 5 or 6 wherein the method further comprises: in a first, low traffic condition, assigning packets to a smaller number of bearers containing packets addressed to receivers of differing receiving capabilities, and in a second, high traffic condition, assigning packets to a greater number of bearers and assigning packets addressed to those of the receivers having similar receiving capabilities onto the same one of said greater number of bearers.

**11.** A method according to any preceding claim, whereby the blocks are transmitted over a satellite link between a satellite station (SAN) and a mobile satellite terminal (MAN) adapted to transmit at a selected one of a plurality of different forward error correction (FEC) coding rates (CR), wherein a change between successive ones of said FEC coding rates (CR) provides a substantially constant change in gain over the satellite link, and wherein at the terminal (MAN) a plurality of bursts are transmitted to the satellite station (SAN), and whereby the FEC coding rates (CR) of the bursts vary between at least some of said bursts in response to a signal from the satellite station (SAN).

**12.** A method according to claim 11, wherein said signal is dependent on a reception quality of one or more of said bursts previously received from the mobile satellite terminal (MAN) by the satellite station (SAN).

**13.** A method according to claim 11 or claim 12, wherein the mobile satellite terminal (MAN) selects the FEC coding rates of at least one of said bursts dependent on a reception quality of one or more transmissions transmitted from the satellite station (SAN) to the mobile satellite terminal (MAN) if said signal is not received from the satellite station within a timeout period.

**14.** A method according to any of claims 1 to 10, whereby the method further comprises controlling a transmission to a satellite station (SAN) from a mobile satellite terminal (MAN), adapted to transmit at a selected one of a plurality of different forward error correction (FEC) coding rates (CR), wherein a change between successive ones of said FEC coding rates (CR) provides a substantially constant change in gain over the satellite link, and wherein a first burst from the mobile satellite terminal (MAN) is received at the satellite station (SAN), and a reception quality of the first burst is determined, and if the reception quality does not meet a predetermined criterion, a command is transmitted to the mobile satellite terminal (MAN) to select a different one of the FEC rates for transmission of a second, subsequent burst such that the second transmission is received with a reception quality which meets the predetermined criterion.

**15.** A method according to any of claims 11 to 14, wherein said substantially constant change in gain is approximately 1 dB.

**16.** A method according to any of claims 11 to 15, wherein the satellite station is a satellite ground station for communicating with the satellite terminal via a satellite.

**17.** A method according to any one of claims 11 to 15, wherein said satellite station is a satellite.

**18.** Apparatus arranged to perform the method steps of any one of claims 1 to 17.

**Patentansprüche**

**1.** Verfahren zum Übertragen von Daten von einem Sender an einen oder mehrere Empfänger innerhalb eines Bursts, umfassend folgende Schritte:

Kodieren von Datenblöcken mit veränderlicher Kodierungsrate (CR) zum Erzeugen von vorwärtsfehlerkorrigierten Blöcken, so dass die Vorwärtsfehlerkorrektur-Kodierungsrate (CR) zwischen den vorwärtsfehler-korrigierten Blöcken variiert (FB1, FB2, FB3, FB4),

wobei im Burst eine Kopfzeile enthalten ist, die die Kodierungsrate (CR) eines der Blöcke anzeigt, und

in dem einen der Blöcke Daten enthalten sind, die die Kodierungsrate (CR) eines oder mehrerer nachfolgenden Blöcke (FB1, FB2, FB3, FB4) anzeigen.

2. Verfahren nach Anspruch 1, wobei der eine der Blöcke der erste der zu übertragenden Blöcke (FB1, FB2, FB3, FB4) ist.

3. Verfahren nach Anspruch 1 oder Anspruch 2, wobei die Kopfzeile ein veränderlicher einzigartiges Wort (UW) ist.

4. Verfahren nach einem der vorhergehenden Ansprüche, wobei die in der Kopfzeile angezeigte Kodierungsrate (CR) kleiner als oder gleich der Kodierungsrate (CR) eines oder mehrerer der nachfolgenden Blöcke (FB1, FB2, FB3, FB4) ist.

5. Verfahren nach einem der vorhergehenden Ansprüche, wobei die Blöcke (FB1, FB2, FB3, FB4) Pakete enthalten, die an eine Mehrzahl von Empfängern adressiert sind.

6. Verfahren nach Anspruch 5, wobei mindestens einige der Pakete zwischen jeweils verschiedenen Blöcken aufgeteilt sind.

7. Verfahren nach Anspruch 5 oder 6, wobei das Verfahren ferner das Bestimmen des am wenigsten fähigen der Empfänger und das Auswählen eines oder mehrerer Parameter der Übertragung beinhaltet, um den Fähigkeiten des am wenigsten fähigen der Empfänger zu entsprechen.

8. Verfahren nach Anspruch 7, wobei die Kodierungsrate (CR) so ausgewählt wird, dass sie den Fähigkeiten des am wenigsten fähigen der Empfänger entspricht.

9. Verfahren nach Anspruch 5 oder 6, wobei das Verfahren ferner das Identifizieren der Empfangsfähigkeiten der drahtlosen Empfänger und das Zuweisen der an Empfänger mit ähnlichen Empfangsfähigkeiten adressierten Pakete zu dem gleichen einer Mehrzahl von Trägern umfasst.

10. Verfahren nach Anspruch 5 oder 6, wobei das Verfahren ferner umfasst: das Zuweisen, in einem ersten Zustand schwachen Verkehrs, von Paketen zu einer kleineren Anzahl von Trägern, die an Empfänger mit verschiedenen Empfangsfähigkeiten adressierte Pakete enthalten, und das Zuweisen, in einem zweiten Zustand starken Verkehrs, von Paketen zu einer größeren Anzahl von Trägern und das Zuweisen von Paketen, die an die Empfänger mit ähnlichen Empfangsfähigkeiten adressiert sind, an den gleichen der größeren Anzahl von Trägern.

11. Verfahren nach einem der vorhergehenden Ansprüche, wobei die Blöcke über eine Satellitenverbindung zwischen einer Satellitenstation (SAN) und einem mobilen Satellitenterminal (MAN) übertragen werden, der angepasst ist, mit einer ausgewählten Rate einer Mehrzahl von verschiedenen Vorwärtsfehlerkorrektur- (FEC) Kodierungsraten zu übertragen, wobei eine Änderung zwischen aufeinander folgenden FEC-Kodierungsraten (CR) eine weitgehend konstante Verstärkungsänderung über die Satellitenverbindung bereitstellt, und wobei an dem Terminal (MAN) eine Mehrzahl von Bursts an die Satellitenstation (SAN) übertragen werden, und wobei die FEC-Kodierungsraten der Bursts zwischen mindestens einigen der Bursts in Reaktion auf ein Signal von der Satellitenstation (SAN) variieren.

12. Verfahren nach Anspruch 11, wobei das Signal abhängig von einer Empfangsqualität eines oder mehrerer Bursts ist, die vorher von dem mobilen Satellitenterminal (MAAI) durch die Satellitenstation (SAN) empfangen wurden.

13. Verfahren nach Anspruch 11 oder 12, wobei das mobile Satellitenterminal (MAN) die FEC-Kodierungsraten mindestens eines der Bursts auswählt, die von der Empfangsqualität einer oder mehrerer der von der Satellitenstation (SAN) an das mobile Satellitenterminal gesendeten Übertragungen abhängig sind, wenn das Signal nicht innerhalb einer Zeitabschaltperiode von der Satellitenstation empfangen wird.

14. Verfahren nach einem der Ansprüche 1 bis 10, wobei das Verfahren ferner das Steuern einer Übertragung an eine Satellitenstation (SAN) von einem mobilen Satellitenterminal (MAN) umfasst, das angepasst ist, mit einer ausgewählten Rate einer Mehrzahl von verschiedenen Vorwärtsfehlerkorrektur- (FEC) Kodierungsraten (CR) zu übertragen, wobei eine Änderung zwischen aufeinander folgenden FEC-Kodierungsraten (CR) eine weitgehend konstante Verstärkungsänderung über die Satellitenverbindung bereitstellt, und wobei ein erstes Burst vom mobilen Satellitenterminal (MAN) an der Satellitenstation (SAN) empfangen wird, und eine Empfangsqualität des ersten Bursts bestimmt wird, und wenn die Empfangsqualität nicht einem vorherbestimmten Kriterium entspricht, ein Befehl an das mobile Satellitenterminal (MAN) gesendet wird, um eine andere der FEC-Raten für die Übertragung eines zweiten nachfolgenden Bursts auszuwählen, derart, dass die zweite Übertragung mit einer Empfangsqualität empfangen wird, die dem vorherbestimmten Kriterium entspricht.

15. Verfahren nach einem der Ansprüche 11 bis 14, wobei die weitgehend konstante Verstärkungsänderung ungefähr 1 dB beträgt.

16. Verfahren nach einem der Ansprüche 11 bis 15, wobei die Satellitenstation eine Satellitenbodenstation zur Kommunikation mit dem Satellitenterminal über einen Satelliten ist.

17. Verfahren nach einem der Ansprüche 11 bis 15, wobei die Satellitenstation ein Satellit ist.

18. Vorrichtung, darauf eingerichtet, die Verfahrensschritte nach einem der Ansprüche 1 bis 17 durchzuführen.


**Revendications**

1. Procédé de transmission de données d'un émetteur vers un ou plusieurs récepteurs dans l'intervalle d'une rafale, comprenant les étapes consistant à :

   coder des blocs de données avec un débit de codage (CR) variable pour générer des blocs corrigés sans voie de retour de sorte que le débit de codage (CR) à correction d'erreurs sans voie de retour varie parmi les blocs corrigés sans voie de retour (FB1, FB2, FB3, FB4),
   inclure dans la rafale un en-tête indiquant le débit de codage (CR) de l'un des blocs, et
   inclure dans ledit bloc des données indiquant le débit de codage (CR) d'un ou de plusieurs bloc(s) suivant(s) (FB1, FB2, FB3, FB4).

2. Procédé selon la revendication 1, dans lequel ledit un des blocs est un premier des blocs (FB1, FB2, FB3, FB4) à transmettre.

3. Procédé selon la revendication 1 ou 2, dans lequel ledit en-tête comprend un mot unique (UW) variable.

4. Procédé selon l'une quelconque des revendications précédentes, dans lequel le débit de codage (CR) indiqué dans l'en-tête est inférieur ou égal au débit de codage (CR) du ou des bloc(s) suivant(s) (FB1, FB2, FB3, FB4).

5. Procédé selon l'une quelconque des revendications précédentes, dans lequel les blocs (FB1, FB2, FB3, FB4) contiennent des paquets adressés à une pluralité de récepteurs.

6. Procédé selon la revendication 5, dans lequel au moins une partie des paquets sont séparés entre des blocs différents.

7. Procédé selon la revendication 5 ou 6, dans lequel le procédé comprend en outre le fait de déterminer le moins capable des récepteurs et de choisir un ou plusieurs paramètres de la transmission afin de s'adapter aux capacités du moins capable des récepteurs.

8. Procédé selon la revendication 7, dans lequel le débit de codage (CR) est choisi pour s'adapter aux capacités du moins capable des récepteurs.

9. Procédé selon la revendication 5 ou 6, dans lequel le procédé comprend en outre le fait d'identifier les capacités de réception des récepteurs sans fil et d'attribuer des paquets adressés aux récepteurs ayant des capacités de réception similaires sur le même support d'une pluralité de supports.

10. Procédé selon la revendication 5 ou 6, dans lequel le procédé comprend en outre : dans une première condition, ou condition de trafic faible, attribuer des paquets à un petit nombre de supports contenant des paquets adressés à des récepteurs ayant différentes capacités de réception, et dans une deuxième condition, vu condition de trafic fort, attribuer des paquets à un plus grand nombre de supports et attribuer des paquets adressés aux récepteurs ayant des capacités de réception similaires sur le même support dudit plus grand nombre de supports.

**11.** Procédé selon l'une quelconque des revendications précédentes, dans lequel les blocs sont transmis via une liaison satellite entre une station satellite (SAN) et un terminal satellite mobile (MAN) adapté pour transmettre à un débit de codage choisi parmi une pluralité de débits de codage (CR) à correction d'erreurs sans voie de retour (FEC) différents, dans lequel un changement entre lesdits débits de codage FEC successifs fournit un changement de gain substantiellement constant sur la liaison satellite, et dans lequel, dans le terminal (MAN), une pluralité de rafales sont transmises à la station satellite (SAN), et moyennant quoi les débits de codage (CR) FEC des rafales varient entre au moins une partie desdites rafales en réponse à un signal provenant de la station satellite (SAN).

**12.** Procédé selon la revendication 11, dans lequel ledit signal dépend d'une qualité de réception d'une ou de plusieurs desdites rafales reçues par la station satellite (SAN) en provenance du terminal satellite mobile (MAN).

**13.** Procédé selon la revendication 11 ou 12, dans lequel le terminal satellite mobile (MAN) choisit les débits de codage FEC d'au moins l'une desdites rafales en fonction d'une qualité de réception d'une ou plusieurs transmissions émises par la station satellite (SAN) vers le terminal satellite mobile (MAN) si ledit signal n'est pas reçu dans les limites d'une période d'attente.

**14.** Procédé selon l'une quelconque des revendications 1 à 10, dans lequel le procédé comprend en outre le fait de commander une transmission vers une station satellite (SAN) depuis un terminal satellite mobile (MAN), adaptée pour transmettre à un débit de codage choisi parmi une pluralité de débits de codage (CR) à correction d'erreurs sans voie de retour (FEC) différents, dans lequel un changement entre lesdits débits de codage (CR) FEC successifs fournit un changement de gain substantiellement constant sur la liaison satellite, et dans lequel une première rafale émise par le terminal satellite mobile (MAN) est reçue dans la station satellite (SAN), et une qualité de réception de la première rafale est déterminée, et si la qualité de réception ne satisfait pas un critère prédéterminé, une instruction est transmise au terminal satellite mobile (MAN) pour choisir un autre des débits FEC pour la transmission d'une deuxième rafale, consécutive, de telle manière que la deuxième transmission est reçue avec une qualité de réception qui satisfait le critère prédéterminé.

**15.** Procédé selon l'une quelconque des revendications 11 à 14, dans lequel ledit changement de gain substantiellement constant vaut approximativement 1 dB.

**16.** Procédé selon l'une quelconque des revendications 11 à 15, dans lequel la station satellite est une station terrienne de télécommunicatian par satellite permettant de communiquer avec le terminal satellite par l'intermédiaire d'un satellite.

**17.** Procédé selon l'une quelconque des revendications 11 à 15, dans lequel ladite station satellite est un satellite.

**18.** Dispositif prévu pour exécuter les étapes de procédé de l'une quelconque des revendications 1 à 17.

**Fig. 1**

SAT

TTC

SAN

NN

NET

MAN

RB

GB

SB

EP 1 468 516 B1

Fig. 2a

SAT

UP

MOD

SYNC

EFSG

ENC

UWT

FT

SCR

HAL

TC

d

CR

EFS

$f_T$

**Fig. 2b**

**Fig. 3**

EP 1 468 516 B1

EP 1 468 516 B1

Fig. 4

19

**Fig. 5**

**Fig. 6**

**Fig. 7**

| UW | FB1 | FB2 | FB3 | FB4 |
|---|---|---|---|---|
| 40 | 640 | 640 | 640 | 640 |

Symbols

1.19 ms  19.05 ms  19.05 ms  19.05 ms  19.05 ms

**Fig. 8**

| GT | CW | UW₁ | FB1 | FB2 | UW₂ |
|---|---|---|---|---|---|
| 54 | 18 | 40 | 1446 | 1446 | 20 |

Symbols

0.36 ms  0.12 ms  0.26 ms  9.56 ms  9.56 ms  0.13ms

**Fig. 9**

FB1    FB2    FB3    FB4

| UW | BB | AVP | CON1 | CON2 | CON3 | |

CR    1/3    2/3    4/5    4/5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0772317 A
- EP 0878924 A
- EP 1130837 A
- EP 0680168 A
- EP 0651531 A

- EP 0924890 A
- EP 0993149 A
- GB 2371952 A
- WO 9934521 A

**Non-patent literature cited in the description**

- **Howlader ; Wu ; Woerner.** Decoder-assisted frame synchronisation for Turbo coded systems. International Symposium on Turbo Codes, 2000

- **Berrou, C. ; Glavieux, A. ; Thitimajshima, P.** Near Shannon limit error-correcting coding and decoding: Turbo codes. *Proc. of ICC '93,* 1064-1070